# EUROPEAN PATENT APPLICATION

(11) **EP 1 450 547 A1**
(43) Date of publication of application: **25.08.2004**
(21) Application number: 03290438.5
(22) Date of filing: 24.02.2003
(51) Int. Cl.: H04M 3/42

(54) **Automatic call routing based on location of called party**

(71) Applicant: ALCATEL, 75008 Paris (FR)
(72) Inventor: Jeannerod, Laurent, F-67205 Oberhausbergen (FR)
(74) Representative: Brose, Gerhard, Dipl.-Ing.

(57) **Abstract**

Incoming telecommunications will be automatically forwarded to a terminal in the closest vicinity of the user when said user will be located inside a perimeter covered by a location system. If the user cannot be located in that perimeter, then such telecommunications can be directly forwarded to some user specific telecommunications terminal. The forwarding can follow some rules defined in a user profile. In such a way, it provides maximum of flexibility to which terminals the telecommunications will have to be forward.

## Description

### Technical Field

The present invention relates to a method for administrating forwarding of a telecommunications destined to a user defined by a telecommunications number associated to a telecommunications terminal located inside a perimeter being covered by a location system. Furthermore, it is related to an exchange terminal dedicated to manage telecommunications destined to such a user. It is also related to a computer-readable medium having a computer program comprising a code for forwarding a telecommunications destined to such a user.

### Background of the invention

Up to now, it is possible to activate some call forwarding by programming directly on the telecommunications terminal the destination of such call forwarding. An incoming telecommunications destined to said telecommunications terminal will then be forward to the terminal entered manually by the user. Such services are usually used e.g. when leaving an office. In that case, the user before leaving his office must enter some code on his terminal at his desk to activate a forwarding to some other desk. Furthermore, the user must enter the phone number of the terminal to which all the telecommunications have to be forward. This is a way to provide that during the absence of a callee, the caller will nevertheless reach someone. It is also a possibility to perform some systematic forwarding to an user specific terminal like his mobile phone or private phone at home. The forwarding of the telecommunications is managed usually by the private branch exchange to which the called terminal is connected.

But such procedure is cumbersome since the forwarding of a telecommunications will take place only after the forwarding was set-up on the terminal. Even more, such forwarding will be activated as long as the user did not cancel the forwarding. Such cancellation is only possible normally by entering some code on the telecommunications terminal. Alternately, there exists some possibilities to modify the forwarding set-up remotely using some specific username and password. Also for that, the user must enter some code and only the destination for the forwarding can be modified.

All these have a lot of drawbacks, specially that any update for the forwarding must be entered by the user. It is not rare for example, that a user when coming back at his office where a forwarding was set-up on his telecommunications terminal may forgot to cancel such forwarding. In that case, the user may not realize immediately the impossibility to be reached through his telecommunications terminal.

### Summary of the invention

In view of the above, it is an object of the present invention to provide a possibility for a forwarding of telecommunications in a complete flexible way without requiring any constraint.

This object is achieved in accordance with the invention by applying a method for administrating forwarding of a telecommunications destined to a user, said method being coupled to the location of the user inside some perimeter. In that way, the terminal to which said incoming telecommunications will be forward will be chosen accordingly the result of that location.

Advantageously, an incoming telecommunications can be automatically forwarded to a terminal in the closest vicinity of the user when located inside a perimeter covered by a location system. If the user cannot be located in that perimeter, then such telecommunications can be directly forwarded to some user specific telecommunications terminal.

In an embodiment according to the invention, the forwarding will follow some rules defined in some user profile. Latter will have to be defined by the user in some previous personal set-up to be applied when forwarding. In such a way, it provides maximum of flexibility to which terminals the telecommunications will have to be forward. It is possible to chose a telecommunications terminal like a mobile one or even the one at home i.e. clearly outside the perimeter covered by said location system. In that case, the forwarding will be applied also through a public network like ISDN (Integrated Services Digital Line), PSTN (Public Switched Telephone Network) or PLMN (Public Land Mobile Network).

In an embodiment of the present invention, the location system is based on the location of some mobile terminal like a wireless/cordless terminal. It is also possible to use a location system based on the location of some kind of transceiver inserted e.g. in some card to be worn by the user. The location system can be advantageously built using Bluetooth technique e.g. together with some wireless Local Area Network WLAN.

The method for administrating forwarding of telecommunications according to the invention will be preferably managed by an exchange terminal being a Private Branch Exchange or a call server.

Advantageous developments of the invention are described in the dependent claims, the following description and the drawings.

### Description of the drawings

An exemplary embodiment of the invention will now be explained further with the reference to the attached drawings in which:
Fig. 1 shows a schematic view of a call forwarding according to the state of the art;
Fig. 2 shows a schematic view of a call forwarding according to the invention;
Fig. 3 shows a schematic view of a call forwarding according to another embodiment of the invention;
Fig. 4 shows an example of protocol exchange according to an embodiment of the invention.

### Detailed description of preferred embodiments

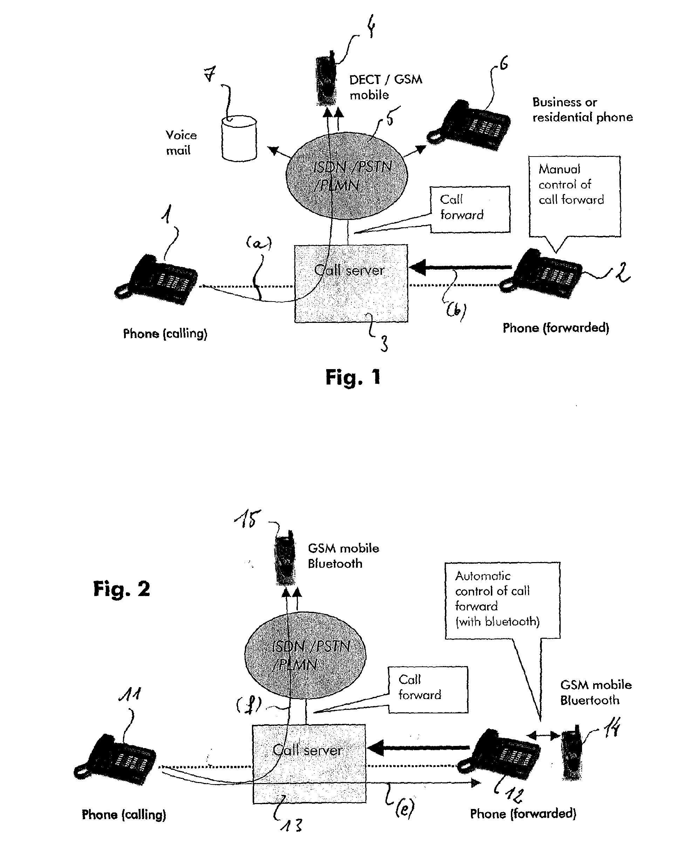

In Fig. 1 is described a typical forwarding of a telecommunications according to the state of the art. Someone ― caller - is activating (a) a telecommunications by dialing at phone 1 the telecommunications number (phone number) of someone else - callee - said telecommunications number being associated to a telecommunications terminal 2 being managed by a call server 3. A forwarding to another terminal will be activated only if the callee did performed before manually on his terminal 2 such forward towards another terminal like a mobile one 4. This forward set-up (b) will be registered by the call server 3 to which is connected the telecommunications terminal 2. Then the activated telecommunications will be directly forwarded (c) to the chosen terminal here the mobile 4. Such forward can be transmitted through external networks 5 like ISDN, PSTN or PLMN. Not only a mobile 4 can be chosen as the destination for the forwarding but also another telecommunications terminal 6 being in a business or residential environment (e.g. private phone) or a voice mail 7. A forwarding accordingly is restrained to the manual activation by the callee.

On the contrary, a forwarding according to the present invention can be administrated in a complete flexibility. In an first embodiment according to the invention, the reception of a telecommunications by a Private Branch exchange PBX or a call server to which is connected the telecommunications terminal associated with the corresponding telecommunications number will activate some forwarding procedure. Latter are directly related with a location system covering some perimeter usually provided with a plurality of terminals like phones among other IP-phones, PC's or any other kind of terminals allowing to perform some telecommunications and somehow connected with the PBX or call server. The location system may consist of a plurality of access points using e.g. Bluetooth to locate some user i.e. a terminal like a mobile or a transceiver (receiver and transmitter) inserted into some card possibly a card reader or a Personal Digital Assistant PDA or a headset with a Bluetooth interface to be associated to said user. All the access points are interconnected via some Wireless Local Area Network managed from some computer. A location procedure may be performed at regular time interval while the results being collected by said computer and let available to the call server.

The forwarding according to the present invention will directly be related to the result of such location procedure. An example is shown on Fig. 2. A caller is dialing some telecommunications number from a terminal 11, such telecommunications number being associated to a terminal 12 connected to a PBX or call server 13. The location system did located the mobile phone 14 here a GSM with Bluetooth interface. But any other possibility for a location system may be applied. In the present case, the call server may simply forward the telecommunications (e) to the called terminal 12 since the presence of the user mobile in the direct vicinity of that terminal 12 can be interpreted that the user is available to take the received telecommunications.

But if the callee moved out of his office for example, still being in the perimeter covered by the location system, then an automatic forwarding may be activated towards some terminal located in the proximity of the user. Optionally, it is possible to provide the user with a list of alternative terminals like a phone, a PC supporting for example Voice over IP or any other terminal allowing some kind of telecommunications. In that case, the user will have to chose the final terminal in his surrounding to which the forwarding will have to be activated.

Furthermore, in an embodiment of the present invention, each user can define some user profile with rules to be applied when performing some forwarding. Such user profile will allow to set some alternatives. For example, if the location system located the callee inside his usual office, the forwarding will apply the rule to forward the received telecommunications directly to his PC. If the location system located the callee inside the perimeter somewhere else, then the forwarding may apply the rule of the user profile to forward the received telecommunications towards the user enterprise mobile phone (DECT). More complex further alternatives could also be defined with some rules stored in the user profile.

The user profile may comprise an alternative when the location system was not able to locate him inside the perimeter. In that case, see Fig. 2, the received telecommunications may be automatically forwarded (f) to a predefined terminal like his mobile phone 15 through an external network ISDN, PSTN and/or PLMN. It could be also that if no one will take off the received telecommunications then some rules in the user profile will define to forward the telecommunications automatically to some voice mail.

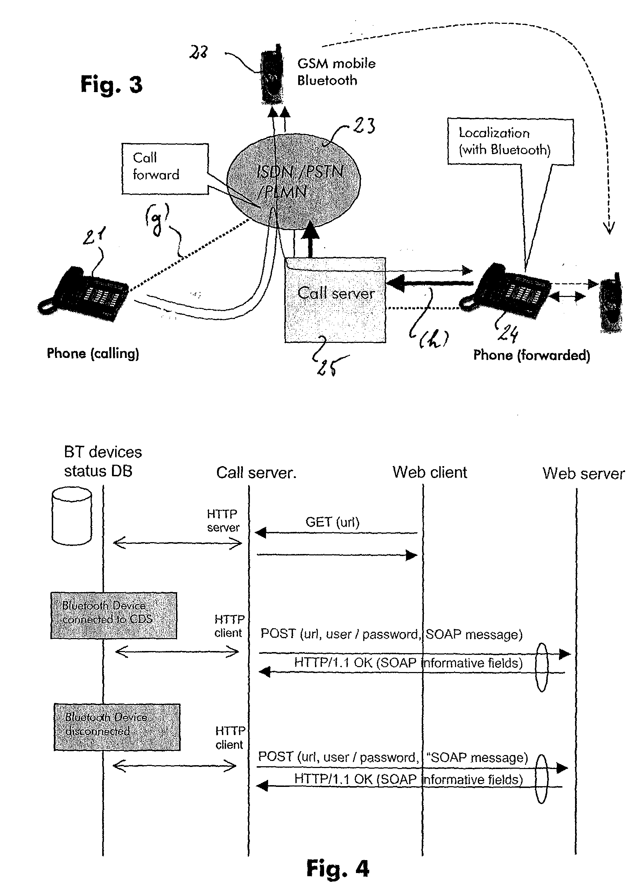

In Fig. 3 is shown an alternative conceivable according to the present invention. A caller will activate a telecommunications from his terminal 21 towards the mobile terminal like a GSM mobile with a Bluetooth interface 22 of the callee, such telecommunications being set-up through some external network ISDN, PSTN and/or PLMN. If during the telecommunications the callee will enter in the perimeter covered by the location system then after some time interval the user will be detected at some access point. Such detection will be notified to the call server which will then be able to apply some forwarding of the already activated telecommunications towards a terminal 24 (h) directly connected to the call server 25. This has the advantage to avoid to pay telephone charges to mobile operators as soon as the callee is inside the perimeter covered by telecommunications terminals managed by the PBX or call server 25. Even more, if the callee was reached at his mobile phone 22 which comprises a Bluetooth interface, it is possible to forward the telecommunications activated outside the coverage of the call server 25 to a path being equivalent to a telecommunications towards an enterprise mobile terminal like DECT. In latter case, the user will not have to change the terminal. Only the telecommunications path will been forward avoiding the mobile operator and saving some telephone charges.

In an embodiment of the invention, it is possible to reach the callee by dialing an IP-address which is set-up to be equivalent to a telecommunications number. This is particularly adapted when are provided some Voice over IP terminals.

The user profile can be set-up at any time but usually when a new user is registered with a specific telecommunications number. Due to the interconnection with the location system, it is no more necessary to update daily the user profile. The forwarding of telecommunications according to the present invention can be applied to any kind of telecommunications i.e. also for Short Message Services SMS or multimedia one. It requested a location system interconnected with the PBX or call server.

In Fig. 4 is shown an example of a Simple Object Access Protocol SOAP corresponding to the invention with

### 1) Notification (from CallServer to Transatel server)

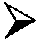 Version = reserved for software update
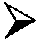 BluetoothDeviceAddress = 6 hexadecimal-encoded bytes separated by colons (":").
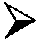 PBXExtension = PBX number extension
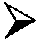 PresenceStatus = 0 if device is not saw by Bluetooth (= > user is outside Business premises), 1 if device has been detected by Bluetooth (⇒ user is inside Business premises)

### 2) Response & fault

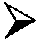 Status = reserved for software update
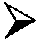 Error type =
   ○ Server.EmployeeNotFound : employee was not found in directory
   ○ Server.EmployeeNotSubscribed : employee is not subscribed to the service
   ○ Server.InternalError : other system errors.

## Claims

1. A method for administrating forwarding of a telecommunications destined to a user defined by a telecommunications number associated to a telecommunications terminal located inside a perimeter being covered by a location system, said method comprising the step of locating said user using said location system **characterised by** the step of forwarding said telecommunications to a terminal in the proximity of the user if located inside said perimeter.

2. The method according to claim 1 **characterised in, that** said forwarding will be performed following some rules defined in a user profile.

3. The method according to claim 2 **characterised in, that** said user profile comprises an alternative to be applied to said telecommunications when said user will not be located inside said perimeter.

4. The method according to claim 2 or 3 **characterised in, that** said user profile comprises the step of forwarding said telecommunications to some user specific telecommunications terminal.

5. The method according to claim 1 **characterised by** the step before forwarding said telecommunications of providing the user with a list of terminals out of which the user being asked to select one terminal to which said telecommunications will be forward.

6. The method according to claim 1 **characterised in, that** said user profile comprises the step to store some specific information from said telecommunications in some user specific memory.

7. The method according to claim 1 **characterised in, that** said location system will be based on the location of a mobile terminal associated to said user.

8. The method according to claim 1 **characterised in, that** said location system will be based on the location of a transceiver to be carried by said user.

9. The method according to claim 1 **characterised in, that** said telecommunications being performed at least partly through an internet while said telecommunications number being an address.

10. An exchange terminal dedicated to manage telecommunications destined to a user defined by a telecommunications number associated to a telecommunications terminal located inside a perimeter being at least partly covered by a location system **characterised in, that** said exchange terminal being set-up to forward a received telecommunications destined to said telecommunications number to some telecommunications terminal in the proximity of the user if located inside said perimeter using said location system.

11. The exchange terminal according to claim 10 **characterised in, that** it activates some user profile defining rules to be applied for the forwarding, while said user profile possibly comprises an alternative to be applied to said telecommunications when said user will not be located inside said perimeter.

12. The exchange terminal according to claim 10 **characterised in, that** it is a private branch exchange or a call server.

13. A computer-readable medium having a computer program thereon, the computer program comprising code for forwarding a telecommunications destined to a user defined by a telecommunications number associated to a telecommunications terminal located inside a perimeter being covered by a location system **characterised in, that** said code requires the result of a location procedure on said user performed by the location system to forward said telecommunications towards a terminal in the proximity of the user if located inside said perimeter.

14. The computer-readable medium according to claim 13 **characterised in, that** said code applies some rules for the forwarding defined in a user profile, while said user profile possibly comprises an alternative to be applied to said telecommunications when said user will not be located inside said perimeter.
